# EUROPEAN PATENT APPLICATION

(11) **EP 4 310 949 A1**
(43) Date of publication of application: **24.01.2024**
(21) Application number: 22936737.0
(22) Date of filing: 18.04.2022
(51) Int. Cl.: H01M 4/48, H01M 4/36

(54) **ELECTRODE ACTIVE MATERIAL PRECURSOR AND PREPARATION METHOD THEREFOR, ELECTRODE ACTIVE MATERIAL AND BATTERY**

(71) Applicant: Contemporary Amperex Technology Co., Limited, Jiaocheng District Ningde Fujian 352100 (CN)
(72) Inventor: WANG, Bangrun, Ningde, Fujian 352100 (CN); LIU, Na, Ningde, Fujian 352100 (CN)
(74) Representative: Jacob, Reuben Ellis
(86) International application number: PCT/CN2022/087489
(87) International publication number: WO 2023/201486

(57) **Abstract**

Provided are an electrode active material precursor, a method for preparing the same, an electrode active material, and a battery. The electrode active material precursor includes carbon-composite oxide particles. The oxide satisfies a formula (1):

MₐO_{b} (1),

where element M is selected from one or more of transition metal elements having a relative atomic mass smaller than 65, and optionally being selected from one or more of Ni, Co, Fe, Mn, Zn, Mg, Ca, Cu, Mn, Sn, Mo, Ru, Ir, V, Nb, or Cr, a>0, and b>0. The carbon-composite oxide particles have a powder resistivity smaller than 100 Ω·cm.

## Description

### FIELD

The present disclosure relates to the technical field of lithium battery, and more particularly, to an electrode active material precursor, a method for preparing the electrode active material precursor, an electrode active material, and a battery.

### BACKGROUND

Energy conservation and emission reduction is pivotal to the sustainable development of the automotive industry. Electric vehicles have become an important part of the sustainable development of the automotive industry due to their advantages of energy conservation and environmental protection. Battery technology is an important factor affecting the development of electric vehicles. With the rapid development of today's society, the use of available energy resources is becoming more and more widespread. However, fossil fuels have significant environmental side effects due to harmful gases they produce, while the fossil energy resources are insufficient to meet the current growing energy demand due to their scarcity. Therefore, one of the most effective ways to solve this problem is to find a new clean energy resource to replace fossil fuels. Batteries have gained great attention because of their stable performance, high specific energy, and the fact that they can be recycled many times. An electrode active material, as an important part of the battery, is the key to determine the quality of the battery.

As the increasingly higher demands on energy density and charging efficiency in the market, especially the power battery market, higher requirements are also raised on the electrode active material. Currently available electrode active materials cannot meet energy density and specific capacity requirements for the new generation of batteries. In addition, in order to improve the performance of batteries, the electrode active material is often subjected to a post-treatment of carbon coating to optimize the transport of electrons in the electrode active material. However, the existing treatment methods are unable to effectively improve the battery performance.

### SUMMARY

The present disclosure aims to solve at least one of the technical problems in the related art. To this end, an objective of the present disclosure is to provide an electrode active material precursor for preparing an electrode active material, to solve the problem that the electrode active material requires a post-treatment of carbon coating.

In a first aspect, an embodiment of the present disclosure provides an electrode active material precursor. The electrode active material precursor includes carbon-composite oxide particles. The oxide satisfies a formula (1): MₐO_{b} (1), where element M is selected from one or more of transition metal elements having a relative atomic mass smaller than 65, optionally being selected from one or more of Ni, Co, Fe, Mn, Zn, Mg, Ca, Cu, Mn, Sn, Mo, Ru, Ir, V, Nb, or Cr; and a>0, and b>0. The carbon-composite oxide particles have a powder resistivity smaller than 100 Ω·cm.

In technical solutions according to embodiments of the present disclosure, the electrode active material precursor includes the carbon-composite oxide particles, in which the carbon composite has high composite uniformity and good dispersibility. Thus, the carbon-composite oxide particles have a low powder resistivity. In this way, the electrode active material prepared using the carbon-composite oxide particles as the precursor does not require the post-treatment of carbon coating, thereby overcoming undesirable effects caused by the above-mentioned conventional post-treatment of carbon coating, improving stability of the electrode active material, and reducing manufacturing costs. In the meantime, due to the low powder resistivity of the carbon-composite oxide particles and the good dispersibility of carbon, the electrode active material prepared using the carbon-composite oxide particles as the precursor has a carbon layer with high coating integrity and a relatively low powder resistivity, thereby increasing a battery capacity. In addition, by effectively utilizing a surface carbon layer in the carbon-composite oxide particles, growth and agglomeration of the electrode active material can be inhibited to limit a size of the electrode active material in a range from a sub-micron level to a nano level. In this way, the electrode active material has a short ion transport path, high kinetics, good stability, and a higher charging capacity during charging. Moreover, since the transition metal element in the carbon-composite oxide particles has a relatively small atomic mass, the prepared electrode active material has a higher charging capacity per gram, produces a lighter post-discharge residual material, and makes up a small weight proportion of an entire electrode plate, thereby further increasing an electrode active material proportion and an energy density of the battery.

In any embodiment, the powder resistivity of the carbon-composite oxide particles is smaller than 10 Ω·cm, and optionally smaller than 1 Ω·cm. By reducing the powder resistivity of the carbon-composite oxide particles, a resistivity of the electrode active material prepared with the carbon-composite oxide particles can be further reduced, thereby increasing the charging capacity per gram.

In any embodiment, a mass percentage of carbon element in the carbon-composite oxide particles ranges from 10% to 40%, and optionally 20% to 30%. When the mass percentage of the carbon element in the carbon-composite oxide particles is controlled to be within the suitable range, the carbon-composite oxide particles having a uniform particle size distribution and high dispersibility of the carbon element can be obtained through uniform carbon composite, and the powder resistivity of the carbon-composite oxide particles and the powder resistivity of the electrode active material prepared using the carbon-composite oxide particles as the precursor can also be reduced, thereby increasing the battery capacity.

In any embodiment, the carbon-composite oxide particles have a median particle size Dv50 of 10 nm to 200 nm, and optionally of 20 nm to 100 nm. By controlling the median particle size Dv50 of the carbon-composite oxide particles within the suitable range, it facilitates the control of the particle size of the electrode active material prepared using the carbon-composite oxide particles as the precursor and also facilitates the preparation of the electrode active material having a low powder resistivity, a suitable median particle size Dv50, and a high charging capacity per gram.

In a second aspect, an embodiment of the present disclosure provides a method for preparing an electrode active material precursor. The method includes: dispersing a carbon source in an aqueous solution containing M ions to obtain a mixed solution; adjusting a pH value of the mixed solution to be alkaline to obtain an alkaline mixture; obtaining a precipitate through a precipitation reaction of the alkaline mixture; separating and washing the precipitate to obtain a precursor; and dehydrating and drying the precursor to obtain the electrode active material precursor, the electrode active material precursor including carbon-composite oxide particles. The oxide satisfies a formula (1): MₐO_{b} (1), where element M is selected from one or more of transition metal elements having a relative atomic mass smaller than 65, optionally being selected from one or more of Ni, Co, Fe, Mn, Zn, Mg, Ca, Cu, Mn, Sn, Mo, Ru, Ir, V, Nb, or Cr; a>0, and b>0. The carbon-composite oxide particles have a powder resistivity smaller than 100 Ω·cm.

The method for preparing the electrode active material precursor is simple and feasible, is suitable for preparation of various carbon-composite oxide particles, and has characteristics of low costs and easy promotion and use. According to the method, the carbon source is added during the reaction to serve as a nucleation site for precipitate, which can inhibit agglomeration of the precipitate and also improve a composite effect of carbon and oxide, reducing the resistivity of the carbon-composite oxide particles. The prepared carbon-composite oxide particles have characteristics such as a uniform particle size distribution, high dispersibility, a low powder resistivity, and a high carbon content.

In any embodiment, the alkaline mixture has a pH value ranging from 9 to 13, and optionally from 10 to 12. By controlling the pH value of the alkaline mixture within the suitable range, it facilitates the preparation of the carbon-composite oxide particles having a low powder resistivity and a suitable median particle size Dv50.

In any embodiment, a reaction time of the precipitation reaction ranges from 4 h to 15 h, and optionally from 6 h to 12 h. By controlling the reaction time of the precipitation reaction within a suitable range, it facilitates the preparation of the carbon-composite oxide particles having a low powder resistivity and a suitable median particle size Dv50.

In any embodiment, a reaction temperature of the precipitation reaction ranges from 30°C to 80°C, and optionally from 40°C to 60°C. By controlling the reaction temperature of the precipitation reaction within a suitable range, it facilitates the preparation of the electrode active material precursor having a low powder resistivity and a suitable median particle size Dv50. In addition, unlike a conventional preparation method which requires a reaction at a high temperature, the method for preparing the electrode active material precursor according to the present disclosure is performed at a low reaction temperature, and thus the energy consumption and costs can be reduced, which is conducive to promotion and application.

In any embodiment, a weak base solution is added to the mixed solution prior to said adjusting the pH value of the mixed solution to be alkaline. By slowly ionizing hydroxide ions from the weak base solution, a nucleation process of the precipitate can be controlled to increase a nucleation rate of the M ions on the carbon source, thereby avoiding rapid growth and precipitation of the precipitate. Thus, the M ions adsorbed on the carbon source can be dispersed and nucleated within sufficient time, thereby improving the dispersibility of the carbon-composite oxide particles, which is conducive to regulation of the particle size of the carbon-composite oxide. It is conducive to the preparation of the carbon-composite oxide particles having a low powder resistivity and a suitable median particle size Dv50.

In any embodiment, the weak base solution is selected from one or more of aqueous ammonia, an ammonium bicarbonate aqueous solution, an ammonium carbonate aqueous solution, a sodium carbonate aqueous solution, and a sodium bicarbonate aqueous solution. The above-mentioned materials are easy to obtain, which facilitates the promotion and application of the method and can reduce costs.

In any embodiment, the carbon source is selected from one or more of carbon black, acetylene black, Ketjen black, carbon nanotubes, graphene, graphite, carbon fiber, and carbon microspheres, thereby further broadening the application scope of the method.

In any embodiment, the aqueous solution containing M ions is prepared by dissolving one or more of sulfate, nitrate, oxalate, and halide containing the element M in water. Easy availability of a raw material further enhances versatility of the method.

In any embodiment, the precursor is dried at 100°C to 200°C for 6 h to 20 h to obtain the electrode active material precursor. By controlling a drying temperature and a drying time, the carbon-composite oxide particles having a low powder resistivity and a suitable median particle size Dv50 can be prepared.

In a third aspect, an embodiment of the present disclosure provides an electrode active material. The electrode active material is prepared using the electrode active material precursor according to any of the above-mentioned embodiments as a raw material. The electrode active material prepared using the electrode active material precursor has an optimized powder resistivity and particle size, a uniform and complete carbon coating layer, and high electronic conductivity, charging capacity and stability, thereby further enhancing the battery capacity. The electrode active material does not require the post-treatment of carbon coating, thereby saving manufacturing costs.

In a fourth aspect, an embodiment of the present disclosure provides a battery. The battery includes the electrode active material according to the above-mentioned embodiment. The battery has a high capacity.

The above description is merely an overview of the technical solutions of the present disclosure. To facilitate a clear understanding of technical means of the present disclosure to implement the technical solutions in accordance with the contents of the specification, and to clarify and explain the above and other objects, features, and advantages of the present disclosure, specific embodiments of the present disclosure will be described below.

### BRIEF DESCRIPTION OF THE DRAWINGS

In the accompanying drawings, same or similar components or elements are denoted by same reference numerals throughout the accompanying drawings, unless otherwise specified. These accompanying drawings are not necessarily drawn to scale. It should be understood that these accompanying drawings depict only some embodiments disclosed in accordance with the present disclosure and should not be construed as limiting the scope of the present disclosure.
FIG. 1 is a Scanning Electron Microscope (SEM) image of Fe₂O_{3@}C provided in Example 3.
FIG. 2 is a Transmission Electron Microscope (TEM) image of Fe₂O₃@C provided in Example 3.
FIG. 3 is an X-ray Diffraction (XRD) spectrum of Fe₂O₃@C provided in Example 3.
FIG. 4 is a TEM image of Li₅FeO₄@C provided in Example 25.
FIG. 5 is an XRD spectrum of Li₅FeO₄@C provided in Example 25.
FIG. 6 is a first-time charge curve of Li₅FeO₄@C provided in Example 25.

### DETAILED DESCRIPTION

Embodiments of technical solutions of the present disclosure will be described in detail in conjunction with the accompanying drawings. Since the following embodiments are only intended to illustrate the technical solutions of the present disclosure more clearly, they are used as examples only, and should not be construed as limiting the protection scope of the present disclosure.

Unless defined otherwise, all technical and scientific terms used herein have the same meaning as commonly understood by those skilled in the art to which the present disclosure belongs. Terms used herein are for the purpose of describing particular embodiments only, rather than limiting the present disclosure. Terms "comprise", "include", and "have", and any variations thereof in the description, claims, and brief description of the drawings of the present disclosure are intended to cover non-exclusive inclusions.

In the description of the embodiments of the present disclosure, technical terms such as "first" and "second" are only used to distinguish different objects, and they cannot be understood as indicating or implying relative importance or implicitly indicating the number of indicated technical features, a specific sequence, or major and minor relationships. In the description of the embodiments of the present disclosure, "plurality" means at least two, unless otherwise specifically defined.

Reference herein to "an embodiment" means that a particular feature, structure, or characteristic described in conjunction with the embodiment can be included in at least one embodiment of the present disclosure. Appearances of this phrase in various places in the specification are not necessarily all referring to the same embodiment, nor the separate or alternative embodiments mutually exclusive with other embodiments. It should be explicitly and implicitly understood by those skilled in the art that the embodiments described herein can be combined with other embodiments.

In the description of the embodiments of the present disclosure, the term "and/or" only represents a relationship between the associated objects, indicating that three relationships may exist. For example, "A and/or B" may mean three situations, i.e., A exists only, B exists only, or both A and B exist. In addition, the character "/" in the present disclosure generally represents an "or" relationship between the correlated objects preceding and succeeding the symbol.

In the description of the embodiments of the present disclosure, the term "plurality" refers to at least two (including two). Similarly, "plurality of groups" refers to at least two groups (including two groups), and "plurality of plates" refers to at least two plates (including two plates).

In the description of the embodiments of the present disclosure, the orientation or position relationship indicated by the technical term "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", or "circumferential", etc., is based on the orientation or position relationship illustrated in the drawings, and is only for the convenience of describing the embodiments of the present disclosure and simplifying the description, rather than indicating or implying that the pointed device or element must have a specific orientation, or it can be constructed and operated in a specific orientation. Therefore, it cannot be understood as a limitation of the embodiments of the present disclosure.

In the description of the embodiments of the present disclosure, unless otherwise clearly specified and limited, technical terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

In the related art, an electrode active material is often mixed with a carbon material for a post-treatment of carbon coating to improve a battery capacity. Particularly, the lithium-rich metal oxide is often subjected to the post-treatment of carbon coating, in order to solve a problem of poor stability and poor kinetics thereof. However, it was found in the study that the post-treatment of carbon coating has the following disadvantages. Firstly, the post-treatment of carbon coating may result in poor coating integrity and high randomness. Secondly, since a phase change is likely to occur on a surface of the lithium-rich metal oxide during the post-treatment of carbon coating, active lithium inside the material may be released and produces a by-product lithium carbonate on the surface, which in turn decreases a charging capacity per gram of the lithium-rich metal oxide. Furthermore, the post-treatment of carbon coating has strict requirements on a production environment, which increases the production costs and is unfavorable to large-scale production. More importantly, the post-treatment of carbon coating on the lithium-rich metal oxide may also increase agglomeration of the lithium-rich metal oxide, resulting in further increased particle size. The increased particle size may deteriorate its de-lithium kinetics and reduce its charging capacity per gram.

In this regard, in a first aspect, an embodiment of the present disclosure provides an electrode active material precursor. The electrode active material precursor includes carbon-composite oxide particles. The oxide satisfies a formula (1): MₐO_{b} (1), where element M is selected from one or more of transition metal elements having a relative atomic mass smaller than 65, optionally being selected from one or more of Ni, Co, Fe, Mn, Zn, Mg, Ca, Cu, Mn, Sn, Mo, Ru, Ir, V, Nb, or Cr; and a>0, and b>0. The carbon-composite oxide particles have a powder resistivity smaller than 100 Ω·cm.

The electrode active material precursor means that it can be used as a raw material for preparing an electrode active material. In some embodiments, an upper limit of the powder resistivity of the carbon-composite oxide particles may be selected from 50 Ω·cm, 40 Ω·cm, 30 Ω·cm, and 20 Ω·cm.

In the present disclosure, the term "powder resistivity" refers to a parameter used to characterize electrical conductivity of a material itself, which is different from resistivity of an electrode plate. Typically, the powder resistivity is measured using a tester such as a four-probe instrument in accordance with standard GB/T 30835-2014, "*Carbon composite lithium iron phosphate positive electrode materials for lithium-ion battery*".

In some embodiments, the carbon-composite oxide particles are a composite material including carbon and oxide particles. It should be understood that the carbon and the oxide particles may be composited in any manner such as physical mixing, chemical compositing, etc. In some embodiments, the carbon and the oxide particles may be composited through stirring, grinding, ultrasonication, in-situ growth, grafting, coating, etc.

In some embodiments, MₐO_{b} is selected from one or more of M¹O, M²O₂, M³₂O₅, M⁴₂O₃, and M⁵O. M¹ includes one or more of Ni, Co, Fe, Mn, Zn, Mg, Ca, and Cu. M² includes one or more of Mn, Sn, Mo, Ru, and Ir. M³ includes one or more of V, Nb, Cr, and Mo. M⁴ includes one or more of Fe, Cr, V, and Mo. M⁵ includes one or more of Co, V, Cr, and Mo.

The transition metal elements refer to a series of metal elements in region *d* and region *ds* of the periodic table of elements. Elements in region *d* include elements in group IIIB to group VIIB and group VIII of the periodic table of elements. Elements in region *ds* include elements in group IB to group IIB of the periodic table of elements.

The electrode active material precursor according to the embodiments of the present disclosure includes the carbon-composite oxide particles, in which the carbon composite has high composite uniformity and good dispersibility. Thus, the carbon-composite oxide particles have a low powder resistivity. In this way, the electrode active material prepared using the carbon-composite oxide particles as the precursor does not require the post-treatment of carbon coating, thereby overcoming undesirable effects caused by the above-mentioned conventional post-treatment of carbon coating, improving stability of the electrode active material, and reducing manufacturing costs. In the meantime, due to the low powder resistivity of the carbon-composite oxide particles and the good dispersibility of carbon, the electrode active material prepared using the carbon-composite oxide particles as the precursor has a carbon layer with high coating integrity and a relatively low powder resistivity, thereby increasing a battery capacity. In addition, by effectively utilizing a surface carbon layer in the carbon-composite oxide particles, growth and agglomeration of the electrode active material can be inhibited to limit a size of the electrode active material in a range from a sub-micron level to a nano level. In this way, the electrode active material has a short ion transport path, high kinetics, good stability, and a higher charging capacity during charging. Moreover, since the transition metal element in the carbon-composite oxide particles has a relatively small atomic mass, the prepared electrode active material has a higher charging capacity per gram, produces a lighter post-discharge residual material, and makes up a small weight proportion of an entire electrode plate, thereby further increasing an electrode active material proportion and an energy density of the battery.

In some embodiments, the powder resistivity of the carbon-composite oxide particles is smaller than 10 Ω·cm, and optionally smaller than 1 Ω·cm. The upper limit of the powder resistivity may be selected from 9 Ω·cm, 8 Ω·cm, 7 Ω·cm, 6 Ω·cm, 5 Ω·cm, 4.25 Ω·cm, 3.58 Ω·cm, 2.78 Ω·cm, 2.28 Ω·cm, 2.15 Ω·cm, 1.38 Ω·cm, 1.02 Ω·cm, 0.98 Ω·cm, 0.95 Ω·cm, 0.56 Ω·cm, 0.42 Ω·cm, 0.31 Ω·cm, 0.3 Ω·cm, 0.28 Ω·cm, 0.26 Ω·cm, 0.25 Ω·cm, 0.24 Ω·cm, 0.23 Ω·cm, 0.22 Ω·cm, 0.21 Ω·cm, and 0.19 Ω·cm. By reducing the powder resistivity of the carbon-composite oxide particles, a resistivity of the electrode active material prepared with the carbon-composite oxide particles can be further reduced, thereby increasing the charging capacity per gram.

In some embodiments, a mass percentage of carbon element in the carbon-composite oxide particles ranges from 10% to 40%, and optionally 20% to 30%. In some embodiments, the mass percentage of the carbon element in the carbon-composite oxide particles may be selected from 10%, 18%, 20%, 22%, 23%, 24%, 25%, 30%, and 40%.

In some embodiments, the mass percentage of the carbon element in the carbon-composite oxide particles is measured by using a carbon content analyzer. In the present disclosure, the mass percentage of the carbon element in the carbon-composite oxide particles can be adjusted by changing a mass of the added carbon source during the preparation of the carbon-composite oxide.

An excessively high mass percentage of the carbon element in the carbon-composite oxide particles may likely result in a lower proportion of oxide in the carbon-composite oxide particles, agglomeration of the carbon material itself, and a poor composite effect. When the mass percentage of the carbon element in the carbon-composite oxide particles is controlled to be within the suitable range, the carbon-composite oxide particles having a uniform particle size distribution and high dispersibility of the carbon element can be obtained through uniform carbon composite, and the powder resistivity of the carbon-composite oxide particles and the powder resistivity of the electrode active material prepared using the carbon-composite oxide particles as the precursor can also be reduced, thereby increasing the battery capacity.

In some embodiments, the carbon-composite oxide particles have a median particle size Dv50 of 10 nm to 200 nm, and optionally of 20 nm to 100 nm. In some embodiments, the median particle size Dv50 of the carbon-composite oxide particles may be selected from 20 nm, 30 nm, 40 nm, 45 nm, 47 nm, 58 nm, 60 nm, 61 nm, 62 nm, 65 nm, 68 nm, 70 nm, 75 nm, 80 nm, 83 nm, 94 nm, 100 nm, 110 nm, and 200 nm.

In the present disclosure, the median particle size Dv50 of the carbon-composite oxide particles has the well-known meaning in the art. The median particle size Dv50, also referred to as an average particle size, indicates a particle size corresponding to a cumulative volume distribution percentage of a material reaching 50%. The median particle size Dv50 can be determined using methods and instruments known in the art. For example, the median particle size Dv50 may be determined using a laser particle size analyzer with reference to the standard GB/T 19077-2016, "*Particle size analysis-Laser diffraction methods*".

An excessively small particle size of the carbon-composite oxide particles may result in an excessively large specific surface area and excessively high specific surface energy. Thus, during the preparation of the electrode active material, the agglomeration of the carbon-composite oxide particles may occur, and dispersibility may be reduced. An excessively great particle size of the carbon-composite oxide particles may result in a deteriorated composite effect of carbon and oxide particles. By controlling the median particle size Dv50 of the carbon-composite oxide particles within the suitable range, it facilitates the control of the particle size of the electrode active material prepared using the carbon-composite oxide particles as the precursor and also facilitates the preparation of the electrode active material having a low powder resistivity, a suitable median particle size Dv50, and a high charging capacity per gram.

In a second aspect, an embodiment of the present disclosure provides a method for preparing the above-mentioned electrode active material precursor. The method includes: dispersing a carbon source in an aqueous solution containing M ions to obtain a mixed solution; adjusting a pH value of the mixed solution to be alkaline to obtain an alkaline mixture; obtaining a precipitate through a precipitation reaction of the alkaline mixture; separating and washing the precipitate to obtain a precursor; and dehydrating and drying the precursor to obtain the electrode active material precursor, the electrode active material precursor including carbon-composite oxide particles. The oxide satisfies a formula (1): MₐO_{b} (1), where element M is selected from one or more of transition metal elements having a relative atomic mass smaller than 65, optionally being selected from one or more of Ni, Co, Fe, Mn, Zn, Mg, Ca, Cu, Mn, Sn, Mo, Ru, Ir, V, Nb, or Cr; a>0, and b>0. The carbon-composite oxide particles have a powder resistivity smaller than 100 Ω·cm.

In some embodiments, the aqueous solution containing M ions is prepared by dissolving a salt containing M ions in water. In some embodiments, a concentration of the element M in the mixed solution ranges from 0.5 mol/L to 10 mol/L. In some embodiments, the carbon source in the mixed solution is dispersed in various dispersion manners such as ultrasonication, stirring, and the like. The carbon source is dispersed in the aqueous solution containing M ions in such a manner that the M ions are uniformly adsorbed on the carbon source. The carbon source may act as a matrix in the subsequent precipitation reaction. The M ions, as nucleation reactants, are uniformly dispersed on the matrix, avoiding the agglomeration and growth of a resulting precipitation and inhibiting the growth of the oxide particles.

In some embodiments, the pH value of the mixed solution is adjusted by adjusting a flow velocity and a flow rate of a strong base solution added to the mixed solution. The strong base solution may be selected from one or more of sodium hydroxide and potassium hydroxide. Hydroxide ions can be rapidly ionized from the strong base solution to control a growth process of the precipitate. Optionally, a concentration of the strong base solution ranges from 1 mol/L to 10 mol/L. In some embodiments, the strong base solution is added to the mixed solution after the mixed solution has been stirred for a period of time. In some embodiments, the strong base solution is added to the mixed solution after the mixed solution has been stirred for 0.1 h to 2 h. In some embodiments, the strong base solution is added to the mixed solution after the mixed solution has been stirred for 1 h. In some embodiments, the strong base solution and the mixed solution are added into a reactor kettle through parallel flows, with a flow velocity of the strong base solution being 0.01 times to 0.5 times a flow velocity of the mixed solution. In some embodiments, the strong base solution and the mixed solution are added into the reactor kettle through parallel flows, with the flow velocity of the strong base solution being 0.1 times the flow velocity of the mixed solution. Before an addition of the strong base solution, the stirring of the mixed solution improves dispersibility of both the M ions and the carbon source, which assists in adsorption of the M ions on the carbon source, thereby avoiding rapid growth of the carbon-composite oxide particle and facilitating the preparation of the carbon-composite oxide particles having high dispersibility and a uniform particle size.

In some embodiments, the precipitation reaction is carried out under stirring. In some embodiments, a stirring intensity is 100 to 500 revolutions per minute (rpm). In some embodiments, after the reaction is complete, the precipitate is filtered by suction or centrifuged to separate the precipitate. In some embodiments, the precipitate is repeatedly rinsed with distilled water or absolute ethanol several times to clean the precipitate. In some embodiments, the carbon-composite oxide particles can be obtained through drying the rinsed product in an oven.

The precipitation reaction refers to a reaction through which a product of interest in the solution is precipitated out in the form of solid phase. In the present disclosure, the M ions are precipitated out of the alkaline mixture to obtain the precipitate.

The method for preparing the electrode active material precursor is simple and feasible, is suitable for preparation of various carbon-composite oxide particles, and has characteristics of low costs and easy promotion and use. According to the method, the carbon source is added during the reaction to serve as a nucleation site for precipitate, which can inhibit agglomeration of the precipitate and also improve a composite effect of carbon and oxide, reducing the resistivity of the carbon-composite oxide particles. The prepared carbon-composite oxide particles have characteristics such as a uniform particle size distribution, high dispersibility, a low powder resistivity, and a high carbon content.

In some embodiments, the alkaline mixture has a pH value ranging from 9 to 13, and optionally from 10 to 12. In some embodiments, the pH value of the alkaline mixture may be selected from any of 8, 9, 10, 11, 11.6, 11.8, 12, and 13.

By adjusting the pH value of the alkaline mixture, a nucleation growth process of the precipitate can be controlled. If the pH value of the alkaline mixture is too high, the precipitation reaction takes a very short time, it is difficult to control the precipitation process, and large-particle precipitate agglomerates are likely to be formed. If the pH value of the alkaline mixture is too low, it is difficult to form the precipitate in the aqueous solution containing M ions. By controlling the pH value of the alkaline mixture within a suitable range, it facilitates the preparation of the carbon-composite oxide particles having a low powder resistivity and a suitable median particle size Dv50.

In some embodiments, a reaction time of the precipitation reaction ranges from 4 h to 15 h, and optionally from 6 h to 12 h. In some embodiments, the reaction time of the precipitation reaction may be selected from any one of 4 h, 6 h, 8 h, 12 h, and 15 h.

By adjusting the reaction time of the precipitation reaction, the nucleation growth process of the precipitate can be controlled. An excessively short reaction time may likely lead to incomplete nucleation growth of the precipitate and poor material crystallinity. An excessively long reaction time may likely lead to continuous growth of the precipitate subsequent to nucleation, resulting in excessively great particles of the precipitate. By controlling the reaction time of the precipitation reaction within a suitable range, it facilitates the preparation of the carbon-composite oxide particles having a low powder resistivity and a suitable median particle size Dv50.

In some embodiments, a reaction temperature of the precipitation reaction ranges from 30°C to 80°C, and optionally from 40°C to 60°C. In some embodiments, the reaction temperature of the precipitation reaction may be selected from any of 40 °C, 50 °C, 60 °C, and 80 °C.

By adjusting the reaction temperature of the precipitation reaction, the nucleation growth process of the precipitate can be controlled. An excessively low reaction temperature may likely result in incomplete nucleation growth of the precipitate and poor material crystallinity. An excessively high reaction temperature may likely result in a rapid growth of the precipitate subsequent to the nucleation, leading to the formation of excessively great particles of the precipitate. By controlling the reaction temperature of the precipitation reaction within a suitable range, it facilitates the preparation of the electrode active material precursor having a low powder resistivity and a suitable median particle size Dv50. In addition, unlike a conventional method for preparing the electrode active material or the electrode active material precursor which requires a reaction at a high temperature, the method for preparing the electrode active material precursor according to the present disclosure is performed at a low reaction temperature, and thus the energy consumption and costs can be reduced, which is conducive to promotion and application.

In some embodiments, a weak base solution is added to the mixed solution prior to said adjusting the pH value of the mixed solution to be alkaline. By slowly ionizing hydroxide ions from the weak base solution, a nucleation process of the precipitate can be controlled to increase a nucleation rate of the M ions on the carbon source, thereby avoiding rapid growth and precipitation of the precipitate. Thus, the M ions adsorbed on the carbon source can be dispersed and nucleated within sufficient time, thereby improving the dispersibility of the carbon-composite oxide particles, which is conducive to regulation of the particle size of the carbon-composite oxide. It is conducive to the preparation of the carbon-composite oxide particles having a low powder resistivity and a suitable median particle size Dv50.

In some embodiments, the weak base solution is added to the mixed solution after the mixed solution has been stirred for a period of time. In some embodiments, the weak base solution is added to the mixed solution after the mixed solution has been stirred for 0.5 h. The stirring of the mixed solution over a period of time can improve the dispersibility of both the M ions and the carbon source, which assists in the adsorption of the M ions on the carbon source, facilitating the preparation of the electrode active material precursor having high dispersibility and a uniform particle size. In some embodiments, the weak base solution and the mixed solution are added to a reactor kettle through parallel flows, with a flow velocity of the weak base solution being 0.1 times to 0.7 times, preferably 0.2 times to 0.6 times, more preferably 0.4 times, a flow velocity of the mixed solution. A nucleation rate is controlled by controlling the flow velocity of the weak base solution, which facilitates the preparation of the carbon-composite oxide particles having a high dispersibility and a uniform particle size.

In some embodiments, the weak base solution is selected from one or more of aqueous ammonia, an ammonium bicarbonate aqueous solution, an ammonium carbonate aqueous solution, a sodium carbonate aqueous solution, and a sodium bicarbonate aqueous solution. In some embodiments, a concentration of the weak base solution ranges preferably 2 mol/L to 8 mol/L. The above-mentioned materials are easy to obtain, which facilitates the promotion and application of the method and can reduce costs.

In some embodiments, the carbon source is selected from one or more of carbon black, acetylene black, Ketjen black, carbon nanotubes, graphene, graphite, carbon fiber, and carbon microspheres. It should be understood that any carbon material may be used as the carbon source, thereby further broadening the scope of application of the method.

In some embodiments, the aqueous solution containing M ions is prepared by dissolving one or more of sulfate, nitrate, oxalate, and halide containing the element M in water. Easy availability of a raw material further enhances versatility of the method.

In some embodiments, the precursor is dried at 100°C to 200°C for 6 h to 20 h to obtain the electrode active material precursor. An excessively low drying temperature or an excessively short drying time may likely result in incomplete removal of water from the precursor, while an excessively high drying temperature or an excessively long drying time may likely result in the agglomeration and growth of the carbon-composite oxide particles. By controlling the drying temperature and the drying time, it facilitates the preparation of the carbon-composite oxide particles having a low powder resistivity and a suitable median particle size Dv50.

In a third aspect, an embodiment of the present disclosure provides an electrode active material. The electrode active material is prepared using the electrode active material precursor according to any of the above-mentioned embodiments as a raw material. The electrode active material prepared using the electrode active material precursor has an optimized powder resistivity and particle size, a uniform and complete carbon coating layer, and high electronic conductivity, charging capacity and stability, thereby further enhancing the battery capacity. The electrode active material does not require the post-treatment of carbon coating, thereby saving manufacturing costs.

In a fourth aspect, an embodiment of the present disclosure provides an electrode active material. The electrode active material includes carbon-coated metal oxide particles. The metal oxide particles satisfy a formula (2): A_{c}M_{d}Oₑ (2), where element A is selected from one or more of alkali metal elements or alkaline earth metal elements; element M is selected from one or more of transition metal elements having a relative atomic mass smaller than 65; c>0, d>0, and e>0.

The alkali metal elements refer to six metal elements in group IA in the periodic table of elements except hydrogen (H), i.e., lithium (Li), natrium (Na), kalium (K), rubidium (Rb), cesium (Cs), and francium (Fr).

The alkaline earth metal elements refer to elements in group IIA of the periodic table of elements, and include six elements, i.e., beryllium (Be), magnesium (Mg), calcium (Ca), strontium (Sr), barium (Ba), and radium (Ra).

The transition metal elements refer to a series of metal elements in region *d* and region *ds* of the periodic table of elements. Elements in region *d* include elements in group IIIB to group VIIB and group VIII of the periodic table of elements. Elements in region *ds* include elements in group IB to group IIB of the periodic table of elements.

Since the transition metal element in the electrode active material according to the embodiment has a relatively small atomic mass, the carbon-coated metal oxide particles have a higher charging capacity per gram under the same quantity of A ions, produces a lighter post-discharge residual material, and makes up a small weight proportion of an entire electrode plate, thereby further increasing the electrode active material proportion and the energy density of the battery.

In some embodiments, the element A is selected from one or more of Li, Na, K, Mg, and Ca. The above-mentioned metal oxide has a high charging capacity per gram and a high energy density, the raw materials thereof are abundant and easily available, and it is applicable in a variety of batteries, having a promising application prospect.

In some embodiments, the metal oxide is selected from one or more of Li₂M¹O₂, Li₂M²O₃, Li₃M³O₄, Li₅M⁴O₄, and Li₆M⁵O₄. M¹ is selected from one or more of Ni, Co, Fe, Mn, and Cu. M² is selected from one or more of Mn, Sn, Mo, Ru, and Ir. M³ includes one or more of V, Nb, Cr, and Mo. M⁴ is selected from one or more of Fe, Cr, V, and Mo. M⁵ includes one or more of Co, V, Cr, and Mo.

In some embodiments, a topography, composition, structure, surface valence state, and electrochemical property of the electrode active material may be modified through adjusting a type and proportion of the element M in the metal oxide described above. In some embodiments, the element M has virous valence states. The valence state of the element M in the metal oxide is lower than its maximum oxidation valence state. The above-mentioned metal oxide has a high charging capacity per gram, a high energy density, and a promising application prospect.

In some embodiments, the metal oxide is selected from one or more of Li₂NiO₂, Li₂CuO₂, Li₂MnO₃, Li₃VO₄, Li₅FeO₄, and Li₆CoO₄. A method for preparing the above-mentioned lithium-rich metal oxide is well developed, and the lithium-rich metal oxide has a high charging capacity per gram and a high energy density, which can meet requirements of the next generation of rechargeable lithium batteries for large-scale grid storage and electric vehicles, having a broad application prospect.

In some embodiments, a molar stoichiometry ratio of the element A to the element M is c:d ≥ 2, based on total mole number of elements in the electrode active material. The quantity of atoms A is greater than that of atoms M in the above-mentioned metal oxide, enabling the electrode active material to have a higher charging capacity per gram.

In some embodiments, the electrode active material has a carbon content of 2 wt% to 20 wt%, optionally 5 wt% to 15 wt%, based on a total weight of the electrode active material. In some embodiments, the electrode active material has the carbon content of 2 wt% to 20 wt%, optionally 5 wt% to 15 wt%, based on a total weight of the carbon-coated metal oxide. The carbon coating in an appropriate content allows the electrode active material to have a low powder resistivity, high material stability and electronic conductivity, and excellent carbon coating performance, which is conducive to the increasing of the battery capacity.

In some embodiments, the electrode active material includes a doping element. A ratio of a solubility product constant of a hydroxide of the doping element to a solubility product constant of a hydroxide of the element M ranges from 10⁻⁵ to 10⁵. The doping element may be Mg, Zn, Al, or Ti. The doping element included in the electrode active material can further improve stability of the electrode active material. In some embodiments, a solubility product refers to a dissolution equilibrium constant of the precipitate and is represented by Kₛₚ. A magnitude of the solubility product reflects a solubility of an insoluble electrolyte. The ratio of the solubility product constant of the hydroxide of the doping element to the solubility product constant of the hydroxide of the element M in the range from 10⁻⁵ to 10⁵ avoids non-uniform doping or even separate precipitation of the doping element due to an excessively great difference between the solubility product of the hydroxide of the doping element and that of the hydroxide of the element M, thereby maximizing the effectiveness of the doping element, and improving the charging capacity per gram and energy density of the electrode active material.

In some embodiments, the powder resistivity of the carbon-coated metal oxide particles is smaller than 1,000 Ω·cm, optionally smaller than 350 Ω·cm, optionally smaller than 10 Ω·cm, and further optionally smaller than 5 Ω·cm. In some embodiments, the powder resistivity of the carbon-coated metal oxide particles is optionally smaller than 100 Ω·cm, and optionally smaller than 50 Ω·cm. In some embodiments, the powder resistivity of the carbon-coated metal oxide particles can be selected from 1.24 Ω·cm, 2.12 Ω·cm, 2.83 Ω·cm, 3.18 Ω·cm, 6.54 Ω·cm, 10.13 Ω·cm, 17.24 Ω·cm, 21.34 Ω·cm, 25.36 Ω·cm, 32.41 Ω·cm, 35.76 Ω·cm, 45.32 Ω·cm, 48.35 Ω·cm, 50.13 Ω·cm, 56.21 Ω·cm, 60.28 Ω·cm, 81.22 Ω·cm, 89.13 Ω·cm, 236.11 Ω·cm, and 313.87 Ω·cm. The carbon-coated metal oxide particles according to the embodiment has a low powder resistivity, high material stability and electronic conductivity, and good carbon coating performance, which is conducive to the increasing of the battery capacity.

In some embodiments, the median particle size Dv50 of the carbon-coated metal oxide particles ranges from 100 nm to 900 nm, and optionally from 300 nm to 700 nm. In some embodiments, the median particle size Dv50 of the carbon-coated metal oxide particles ranges from 100 nm to 800 nm, optionally from 400 nm to 900 nm, and optionally from 200 nm to 600 nm. The carbon-coated metal oxide particles according to the embodiment has a suitable median particle size, which realizes a short ion transport path, high kinetics, and a higher charging capacity per gram during charging. In the meantime, the carbon-coated metal oxide particles according to the embodiment has a suitable specific surface area, and the agglomeration is less likely to occur to cause a lower charging capacity per gram of the carbon-coated metal oxide particles.

In a fifth aspect, an embodiment of the present disclosure provides a method for preparing an electrode active material. The method includes: providing carbon-composite oxide particles, the oxide satisfying a formula (1): MₐO_{b} (1), where element M is selected from one or more of transition metal elements having a relative atomic mass smaller than 65, a>0, and b>0; and performing a sintering processing on the carbon-composite metal oxide particles and an A source to obtain carbon-coated metal oxide particles. The metal oxide satisfies a formula (2): A_{c}M_{d}Oₑ (2), where element A is selected from one or more of alkali metal elements or alkaline earth metal elements, element M is selected from one or more of transition metal elements having a relative atomic mass smaller than 65, c>0, d>0, and e>0.

In some embodiments, the carbon-composite oxide particles are a composite material including carbon and oxide particles. It should be understood that the carbon and the oxide particles may be composited in any manner such as physical mixing, chemical compositing, etc. In some embodiments, the carbon and the oxide particles may be composited through stirring, grinding, ultrasonication, in-situ growth, grafting, etc.

In some embodiments, MₐO_{b} is selected from one or more of M¹O, M²O₂, M³₂O₅, M⁴₂O₃, and M⁵O. M¹ includes one or more of Ni, Co, Fe, Mn, Zn, Mg, Ca, and Cu. M² includes one or more of Mn, Sn, Mo, Ru, and Ir. M³ includes one or more of V, Nb, Cr, and Mo. M⁴ includes one or more of Fe, Cr, V, and Mo. M⁵ includes one or more of Co, V, Cr, and Mo.

In some embodiments, the A source is a raw material including one or more alkali metals or alkaline earth metals, and it may be selected from one or more of lithium hydroxide, lithium carbonate, lithium oxide, lithium oxalate, lithium acetate, sodium hydroxide, sodium carbonate, sodium oxide, sodium oxalate, and sodium acetate.

In some embodiments, for uniform sintering, the carbon-composite metal oxide particles and the A source are mixed uniformly prior to the sintering processing performed on the carbon-composite metal oxide particles and the A source. The carbon-composite metal oxide particles and the A source may be mixed uniformly in any manner such as mechanical stirring, ball milling, chemical mixing, etc., to improve uniformity of the mixing.

In some embodiments, the sintering processing is performed in an atmosphere including an inert gas, to improve purity of a sintered product. The atmosphere may be one or more of nitrogen, argon, or a hydrogen/argon mixture. The inert gas may be any inert gas, such as nitrogen, argon, etc.

In some embodiments, subsequent to said performing the sintering processing on the carbon-composite metal oxide particles and the A source, the sintered product is crushed and/or sieved to obtain the carbon-coated metal oxide particles.

For the carbon-coated metal oxide particles prepared using the above method, an external carbon layer has a high coating integrity, and the material has a low powder resistivity. In addition, through effectively utilizing the surface carbon layer in the carbon-composite oxide particles, the growth and agglomeration of the metal oxide particles during the sintering processing can be inhibited to limit a particle size of the metal oxide particles to be a sub-micron level to a nano level, thereby realizing a short ion transport path, high kinetics, and a higher charging capacity per gram of the carbon-coated metal oxide particles during the charging processing. Meanwhile, the post-treatment of carbon coating on the carbon-coated metal oxide particles is avoided, which effectively improves stability of the carbon-coated metal oxide particles and saves the manufacturing costs.

In some embodiments, the powder resistivity of the carbon-composite oxide particles is smaller than 100 Ω·cm, and optionally smaller than 10 Ω·cm. The low powder resistivity of the carbon-composite oxide particles demonstrates high uniformity and good dispersibility of carbon element composite of the carbon-composite oxide particles. Thus, the electrode active material prepared using the carbon-composite oxide particles as the precursor does not requires the post-treatment of carbon coating, thereby overcoming the undesirable effects caused by the above-mentioned conventional post-treatment of carbon coating, improving stability of the electrode active material, and reducing manufacturing costs. In the meantime, due to the low powder resistivity of the carbon-composite oxide particles and the good dispersibility of carbon, the electrode active material prepared using the carbon-composite oxide particles as the precursor has a carbon layer with high coating integrity, and the carbon-coated metal oxide particles has a relatively low powder resistivity, thereby increasing a battery capacity.

In some embodiments, the median particle size Dv50 of the carbon-composite oxide particles ranges from 10 nm to 200 nm, and optionally from 20 nm to 100 nm. By controlling the median particle size Dv50 of the carbon-composite oxide particles within the suitable range, it facilitates the control of a particle size of the prepared carbon-coated metal oxide, thereby reducing the powder resistivity and increasing the charging capacity per gram of the carbon-coated metal oxide.

In some embodiments, a carbon content in the carbon-composite oxide particles ranges from 10 wt% to 40 wt%, and optionally from 20 wt% to 30 wt%, based on a total weight of the carbon-composite oxide particles. By controlling the carbon content in the carbon-composite oxide particles within the suitable range, it is conducive to the reducing of the powder resistivity of the carbon-coated metal oxide particles and increasing the charging capacity per gram of the carbon-coated metal oxide particles.

In some embodiments, a temperature of the sintering processing ranges from 500°C to 700°C, and optionally from 550°C to 650°C; and/or a duration of the sintering processing ranges from 4 h to 20 h, and optionally from 8 h to 12 h. In some embodiments, the temperature of the sintering processing may be selected from 550°C, 590°C, 600°C, 610°C, 620°C, and 650°C. In some embodiments, the duration of the sintering processing may be selected from 8 h, 10 h, and 12 h.

An excessively low temperature of the sintering processing or an excessively short duration of the sintering processing may likely result in poor crystallinity of the carbon-coated metal oxide particles, incomplete phase presentation, and a low charging capacity per gram. An excessively high temperature of the sintering processing or an excessively long the duration of the sintering processing may likely result in an excessively large median particle size Dv50 of the carbon-coated metal oxide particles, an increased de-lithium path, reduced kinetics, and the low charging capacity per gram. By controlling the temperature and/or duration of the sintering processing within the suitable range, it facilitates the preparation of the carbon-coated metal oxide particles having a low powder resistivity, a suitable median particle size Dv50, and a high charging capacity per gram.

In some embodiments, the A source is selected from one or more of an oxide, salt and hydroxide of an alkali metal or alkaline earth metal, for example, one or more of lithium oxide, sodium oxide, and magnesium oxide. The method has a broad application range and can be used to synthesize various carbon-coated metal oxide particles as desired.

In some embodiments, the A source is selected from one or more of lithium hydroxide, lithium carbonate, lithium oxide, lithium oxalate, and lithium acetate, and a molar ratio of lithium element in the A source to the element M in the carbon-composite oxide particles ranges from 5.5 to 1. In some embodiments, the molar ratio of the lithium element in the A source to the element M in the carbon-composite oxide particles ranges from 5.2 to 1. The lithium-rich metal oxide prepared by this method exhibits a low powder resistivity and a high charging capacity per gram.

In some embodiments, the carbon-composite oxide particles are prepared by a liquid phase precipitation method. The liquid phase precipitation method includes the precipitation reaction, i.e., the reaction in which the product of interest in the solution is precipitated out in the solid phase. The method is simple, low in cost, and easy to popularize and apply on a large scale.

In a sixth aspect, an embodiment of the present disclosure provides an electrode plate. The electrode plate includes a collector, and an electrode active material layer disposed on at least one surface of the collector. The electrode active material layer includes the electrode active material according to any embodiment. The electrode plate enables the battery to have a high capacity.

In a seventh aspect, an embodiment of the present disclosure provides a battery. The battery includes the electrode active material or the electrode plate according to any of the embodiments. The battery has a high capacity.

### Examples

Examples of the present disclosure will be described below. The examples described below are exemplary and intended to explain the present disclosure only, and they should not be construed as limiting the present disclosure. Where no specific techniques or conditions are indicated in the examples, operations were carried out in accordance with the techniques or conditions described in the literature in the art or in accordance with the product specification. Any reagent or instrument used without specifying a manufacturer is a conventional commercially available product.

The following examples provide an electrode active material precursor. Taking Fe₂O₃ as an example, precursor Fe(OH)₃ is obtained through hydrolysis and precipitation, and Fe₂O_{3@}C is obtained through dehydration and drying. Specific preparation methods are described as follows.

### Example 1

Features and properties of the present disclosure are described in further detail below in connection with the example.

FeSO₄·7H₂O, as a raw material, was added with distilled water to prepare a solution having element Fe in a concentration of 5 mol/L. Then, carbon black was added to the above solution under stirring. The carbon black was added in an appropriate amount, until a mass percentage of carbon element in a resulting product was 25%, to obtain a mixed solution.

Preparation of solution A: an ammonium bicarbonate solution with a concentration of 5 mol/L was prepared. Preparation of solution B: a sodium hydroxide solution with a concentration of 2 mol/L was prepared. The mixed solution was added into a reactor kettle. The solution A was added into the reactor kettle 0.5 h after the mixed solution was added, and the solution B was added into the reactor kettle 1 h after the mixed solution was added, to obtain an alkaline mixture. A flow velocity of the solution A was 0.4 times a flow velocity of the mixed solution. A flow velocity of the solution B was 0.1 times that of the mixed solution. A pH value of the alkaline mixture was 9. The alkaline mixture was subjected to a precipitation reaction at a stirring intensity of 300 rpm. A reaction temperature of the precipitation reaction was 50°C, and a reaction time of the precipitation reaction was 8 h.

After completion of the reaction, the precipitate was filtered by suction or centrifuged. The precipitate was repeatedly rinsed with distilled water or absolute ethanol several times to obtain a precursor.

The precursor was dried in an oven at 150°C for 12 h to obtain carbon-composite iron trioxide particles, denoted as Fe₂O₃@C.

### Example 2

This example provides an electrode active material precursor, and a preparation method thereof was substantially the same as that in Example 1, with a difference in that the pH value of the alkaline mixture in Example 1 was set to be 10. Other operating procedures remained the same.

### Example 3

This example provides an electrode active material precursor, and a preparation method thereof was substantially the same as that in Example 1, with a difference in that the pH value of the alkaline mixture in Example 1 was set to be 11. Other operating procedures remained the same.

### Example 4

This example provides an electrode active material precursor, and a preparation method thereof was substantially the same as that in Example 3, with a difference in that the pH value of the alkaline mixture in Example 3 was set to be 12. Other operating procedures remained the same.

### Example 5

This example provides an electrode active material precursor, and a preparation method thereof was substantially the same as that in Example 3, with a difference in that the pH value of the alkaline mixture in Example 3 was set to be 13. Other operating procedures remained the same.

### Example 6

This example provides an electrode active material precursor, and a preparation method thereof was substantially the same as that in Example 3, with a difference in that the reaction time of the precipitation reaction in Example 3 was set to be 4 h. Other operating procedures remained the same.

### Example 7

This example provides an electrode active material precursor, and a preparation method thereof was substantially the same as that in Example 3, with a difference in that the reaction time of the precipitation reaction in Example 3 was set to be 6 h. Other operating procedures remained the same.

### Example 8

This example provides an electrode active material precursor, and a preparation method thereof was substantially the same as that in Example 3, with a difference in that the reaction time of the precipitation reaction in Example 3 was set to be 12 h. Other operating procedures remained the same.

### Example 9

This example provides an electrode active material precursor, and a preparation method thereof was substantially the same as that in Example 3, with a difference in that the reaction time of the precipitation reaction in Example 3 was set to be 15 h. Other operating procedures remained the same.

### Example 10

This example provides an electrode active material precursor, and a preparation method thereof was substantially the same as that in Example 3, with a difference in that the reaction temperature of the precipitation reaction in Example 3 was set to be 30°C. Other operating procedures remained the same.

### Example 11

This example provides an electrode active material precursor, and a preparation method thereof was substantially the same as that in Example 3, with a difference in that the reaction temperature of the precipitation reaction in Example 3 was set to be 40°C. Other operating procedures remained the same.

### Example 12

This example provides an electrode active material precursor, and a preparation method thereof was substantially the same as that in Example 3, with a difference in that the reaction temperature of the precipitation reaction in Example 3 was set to be 60°C. Other operating procedures remained the same.

### Example 13

This example provides an electrode active material precursor, and a preparation method thereof was substantially the same as that in Example 3, with a difference in that the reaction temperature of the precipitation reaction in Example 3 was set to be 80°C. Other operating procedures remained the same.

### Example 14

This example provides an electrode active material precursor, and a preparation method thereof was substantially the same as that in Example 3, with a difference in that the amount of the added carbon black in Example 3 was reduced, allowing the mass percentage of the carbon element in the resulting product to be 10%.

### Example 15

This example provides an electrode active material precursor, and a preparation method thereof was substantially the same as that in Example 3, with a difference in that the amount of the added carbon black in Example 3 was reduced, allowing the mass percentage of the carbon element in the resulting product to be 20%. Other operating procedures remained the same.

### Example 16

This example provides an electrode active material precursor, and a preparation method thereof was substantially the same as that in Example 3, with a difference in that the amount of the added carbon black in Example 3 was increased, allowing the mass percentage of the carbon element in the resulting product to be 30%. Other operating procedures remained the same.

### Example 17

This example provides an electrode active material precursor, and a preparation method thereof was substantially the same as that in Example 3, with a difference in that the amount of the added carbon black in Example 3 was increased, allowing the mass percentage of the carbon element in the resulting product to be 40%. Other operating procedures remained the same.

### Example 18

This example provides an electrode active material precursor, and a preparation method thereof was substantially the same as that in Example 3, with a difference in that the carbon source in Example 3 was replaced by carbon nanotubes (CNTs) and the mass of the added carbon nanotube caused the mass percentage of the carbon element in the resulting product to be 20%. Other operating procedures remained the same.

### Example 19

This example provides an electrode active material precursor, and a preparation method thereof was substantially the same as that in Example 3, with a difference in that the carbon source in Example 3 was replaced by graphite (Gr) and the mass of the added graphite caused the mass percentage of the carbon element in the resulting product to be 18%. Other operating procedures remained the same.

### Example 20

This example provides an electrode active material precursor, and a preparation method thereof was substantially the same as that in Example 3, with the following differences: the Metal salt FeSO₄·7H₂O in Example 3 was replaced by NiSO₄·6H₂O; pH value of the alkaline mixture in Example 3 was set to be 11.8; the reaction time of the precipitation reaction in Example 3 was set to be 8 h; the reaction temperature in Example 3 was changed to 55°C; and the mass of the added carbon black caused the mass percentage of the carbon element in the resulting product to be 23%. Other operating procedures remained the same.

### Example 21

This example provides an electrode active material precursor, and a preparation method thereof was substantially the same as that in Example 3, with the following differences: the Metal salt FeSO₄·7H₂O in Example 3 was replaced by CuSO₄·5H₂O; the pH value of the alkaline mixture in Example 3 was set to be 11.6; the reaction time of the precipitation reaction in Example 3 was set to be 6 h; the reaction temperature in Example 3was set to be 45°C; and the mass of the added carbon black caused the mass percentage of the carbon element in the resulting product to be 22%. Other operating procedures remained the same.

### Example 22

This example provides an electrode active material precursor, and a preparation method thereof was substantially the same as that in Example 3, with the following differences: the Metal salt FeSO₄·7H₂O in Example 3 was replaced by CoSO₄·7H₂O; the pH value of the alkaline mixture in Example 3 was set to be 12; the reaction time of the precipitation reaction in Example 3 was set to be 10 h; the reaction temperature in Example 3 was set to be 60°C; and the mass of the added carbon black caused the mass percentage of the carbon element in the resulting product to be 24%. Other operating procedures remained the same.

### Comparative example 1

This example provides an electrode active material precursor, and a preparation method thereof was substantially the same as that in Example 3, with the following differences: the pH value of the alkaline mixture in Example 3 was set to be 8; and the mass of the added carbon black caused the mass percentage of the carbon element in the resulting product to be 45%. Other operating procedures remained the same.

### Comparative example 2

This comparative example provides an electrode active material precursor, and a preparation method thereof was substantially the same as that in Comparative example 1, with the following differences: the pH value of the alkaline mixture in Comparative example 1 was set to be 14; the reaction time of the precipitation reaction was set to be 2 h; and the mass percentage of the carbon element in the resulting product was 5%. Other operating procedures remained the same.

### Comparative example 3

This comparative example provides an electrode active material precursor, and a preparation method thereof was substantially the same as that in Comparative example 1, with the following differences: the pH value of the alkaline mixture in Comparative example 1 was set to be 11; the reaction time of the precipitation reaction was set to be 2 h; the reaction temperature of the precipitation reaction was set to be 90°C; and the mass percentage of the carbon element in the resulting product was 16%. Other operating procedures remained the same.

### Comparative example 4

This comparative example provides an electrode active material precursor, and a preparation method thereof was substantially the same as that in Comparative example 1, with the following differences: the pH value of the alkaline mixture in Comparative example 1 was set to be 11; the reaction time of the precipitation reaction was set to be 20 h; the reaction temperature of the precipitation reaction was set to be 25°C; and the mass percentage of the carbon element in the resulting product was 35%. Other operating procedures remained the same.

### Comparative example 5

This comparative example provides an electrode active material precursor, and a preparation method thereof was substantially the same as that in Comparative example 1, with the following differences: the carbon black added in Comparative example 1 was not added; the pH value of the alkaline mixture in Comparative example 1 was set to be 11; the reaction time of the precipitation reaction was set to be 8 h; and the reaction temperature of the precipitation reaction was changed to 50°C. Other operating procedures remained the same.

### Comparative example 6

This comparative example provides an electrode active material precursor, and a preparation method thereof was substantially the same as that in Comparative example 1, with the following differences: Fe₂O₃ in Comparative example 5 and the carbon black were mixed through ball milling at 25% by mass of carbon in Comparative example 6, with a ball milling speed of 200 rpm for 6 h. The prepared product was denoted as Fe₂O₃/C.

Parameters related to the carbon-composite oxide particles of the above-mentioned Example 1 to Example 22 and Comparative example 1 to Comparative example 6 are shown in Table 1 below.

**[Table 1] Reaction parameters for Example 1 to Example 22 and Comparative example 1 to Comparative example 6**

| No. | Metal salt | Carbon source | Alkaline mixture pH | Precipitation reaction time (h) | Precipitation reaction temperature (°C) | Carbon content in product (wt%) |
|---|---|---|---|---|---|---|
| Example 1 | FeSO₄·7H₂O | carbon black | 9 | 8 | 50 | 25% |
| Example 2 | FeSO₄·7H₂O | carbon black | 10 | 8 | 50 | 25% |
| Example 3 | FeSO₄·7H₂O | carbon black | 11 | 8 | 50 | 25% |
| Example 4 | FeSO₄·7H₂O | carbon black | 12 | 8 | 50 | 25% |
| Example 5 | FeSO₄·7H₂O | carbon black | 13 | 8 | 50 | 25% |
| Example 6 | FeSO₄·7H₂O | carbon black | 11 | 4 | 50 | 25% |
| Example 7 | FeSO₄·7H₂O | carbon black | 11 | 6 | 50 | 25% |
| Example 8 | FeSO₄·7H₂O | carbon black | 11 | 12 | 50 | 25% |
| Example 9 | FeSO₄·7H₂O | carbon black | 11 | 15 | 50 | 25% |
| Example 10 | FeSO₄·7H₂O | carbon black | 11 | 8 | 30 | 25% |
| Example 11 | FeSO₄·7H₂O | carbon black | 11 | 8 | 40 | 25% |
| Example 12 | FeSO₄·7H₂O | carbon black | 11 | 8 | 60 | 25% |
| Example 13 | FeSO₄·7H₂O | carbon black | 11 | 8 | 80 | 25% |
| Example 14 | FeSO₄·7H₂O | carbon black | 11 | 8 | 50 | 10% |
| Example 15 | FeSO₄·7H₂O | carbon black | 11 | 8 | 50 | 20% |
| Example 16 | FeSO₄·7H₂O | carbon black | 11 | 8 | 50 | 30% |
| Example 17 | FeSO₄·7H₂O | carbon black | 11 | 8 | 50 | 40% |
| Example 18 | FeSO₄·7H₂O | carbon nanotubes | 11 | 8 | 50 | 20% |
| Example 19 | FeSO₄·7H₂O | graphite | 11 | 8 | 50 | 18% |
| Example 20 | NiSO₄·6H₂O | carbon black | 11.8 | 8 | 55 | 23% |
| Example 21 | CuSO₄·5H₂O | carbon black | 11.6 | 6 | 45 | 22% |
| Example 22 | CoSO₄·7H₂O | carbon black | 12 | 10 | 60 | 24% |
| Comparative example 1 | FeSO₄·7H₂O | carbon black | 8 | 8 | 50 | 45% |
| Comparative example 2 | FeSO₄·7H₂O | carbon black | 14 | 2 | 50 | 5% |
| Comparative example 3 | FeSO₄·7H₂O | carbon black | 11 | 2 | 90 | 16% |
| Comparative example 4 | FeSO₄·7H₂O | carbon black | 11 | 20 | 25 | 35% |
| Comparative example 5 | FeSO₄·7H₂O | - | 11 | 8 | 50 | / |
| Comparative example 6 | FeSO₄·7H₂O | carbon black | / | / | / | 25% |

In the following examples and comparative examples, the material prepared by the method described in the above examples were selected as the electrode active material precursor, unless otherwise stated.

### Example 23

Features and properties of the present disclosure are described in further detail below in connection with the example.

This example provides an electrode active material. A specific preparation method is described as follows by taking Li₅FeO₄@C as an example.

Mixing: Fe₂O_{3@}C having a carbon content of 25% was selected as the electrode active material precursor. Fe₂O₃@C had a Dv50 of 10 nm and a powder resistivity of 1.02 Ω·cm. In addition, lithium hydroxide (LiOH·H₂O) was selected as the A source, and added to a mechanical fusion machine in accordance with a molar ratio of metal Li to metal Fe being 5.1:1. The mixing was performed at 300 rpm for 6 h by means of mechanical fusion.

Sintering: the mixed raw material was heated to a sintering temperature of 600°C under nitrogen at a rate of 3°C/min. A sintering time was 10 h. A product was obtained after natural cooling.

Crushing and grading: the product was crushed, graded, and sieved to obtain the carbon-coated metal oxide particles (Li₅FeO₄@C).

### Example 24

This example provides an electrode active material, and a preparation method thereof was substantially the same as that in Example 23, with differences in that the Dv50 of Fe₂O_{3@}C in Example 23 was changed to 20 nm and the powder resistivity was 0.56 Ω·cm.

### Example 25

This example provides an electrode active material, and a preparation method thereof was substantially the same as that in Example 23, with differences in that the Dv50 of Fe₂O_{3@}C in Example 23 was changed to 60 nm and the powder resistivity was 0.22 Q cm.

### Example 26

This example provides an electrode active material, and a preparation method thereof was substantially the same as that in Example 25, with differences in that the Dv50 of Fe₂O_{3@}C in Example 25 was changed to 100 nm and the powder resistivity was 3.58 Ω cm.

### Example 27

This example provides an electrode active material, and a preparation method thereof was substantially the same as that in Example 25, with differences in that the Dv50 of Fe₂O_{3@}C in Example 25 was changed to 200 nm and the powder resistivity was 8.32 Q cm.

### Example 28

This example provides an electrode active material, and a preparation method thereof was substantially the same as that in Example 25, with differences in that the carbon content of Fe₂O₃@C in Example 25 was changed to 10% and the powder resistivity was 15.34 Ω cm.

### Example 29

This example provides an electrode active material, and a preparation method thereof was substantially the same as that in Example 25, with differences in that the carbon content of Fe₂O₃@C in Example 25 was changed to 20% and the powder resistivity was 10.13 Ω cm.

### Example 30

This example provides an electrode active material, and a preparation method thereof was substantially the same as that in Example 25, with differences in that the carbon content of Fe₂O₃@C in Example 25 was changed to 30% and the powder resistivity was 0.48 Ω cm.

### Example 31

This example provides an electrode active material, and a preparation method thereof was substantially the same as that in Example 25, with differences in that the carbon content of Fe₂O₃@C in Example 25 was changed to 40% and the powder resistivity was 0.71 Ω cm.

### Example 32

This example provides an electrode active material, and a preparation method thereof was substantially the same as that in Example 25, with a difference in that the sintering temperature in Example 25 was changed to 500°C.

### Example 33

This example provides an electrode active material, and a preparation method thereof was substantially the same as that in Example 25, with a difference in that the sintering temperature in Example 25 was changed to 550°C.

### Example 34

This example provides an electrode active material, and a preparation method thereof was substantially the same as that in Example 25, with a difference in that the sintering temperature in Example 25 was changed to 650°C.

### Example 35

This example provides an electrode active material, and a preparation method thereof was substantially the same as that in Example 25, with a difference in that the sintering temperature in Example 25 was changed to 700°C.

### Example 36

This example provides an electrode active material, and a preparation method thereof was substantially the same as that in Example 25, with a difference in that the sintering time in Example 25 was changed to 4 h.

### Example 37

This example provides an electrode active material, and a preparation method thereof was substantially the same as that in Example 25, with a difference in that the sintering time in Example 25 was changed to 8 h.

### Example 38

This example provides an electrode active material, and a preparation method thereof was substantially the same as that in Example 25, with a difference in that the sintering time in Example 25 was changed to 12 h.

### Example 39

This example provides an electrode active material, and a preparation method thereof was substantially the same as that in Example 25, with a difference in that the sintering time in Example 25 was changed to 20 h.

### Example 40

This example provides an electrode active material, and a preparation method thereof was substantially the same as that in Example 25, with differences in that the carbon source in Example 25 was replaced by the carbon nanotubes and the powder resistivity of the precursor Fe₂O₃@CNTs was 0.24 Ω cm.

### Example 41

This example provides an electrode active material, and a preparation method thereof was substantially the same as that in Example 25, with differences in that the carbon source in Example 25 was changed from carbon black to graphite, and the powder resistivity of the precursor Fe₂O₃@Gr was 0.23 Q cm.

### Example 42

This example provides an electrode active material, and a preparation method thereof was substantially the same as that in Example 25, with the following differences: Fe₂O_{3@}C in Example 25 was changed to NiO@C; a Dv50 of NiO@C was 58 nm; the powder resistivity was 0.21 Ω·cm; and a carbon content of NiO@C was 23%; and the sintering temperature was changed to 620°C.

### Example 43

This example provides an electrode active material, and a preparation method thereof was substantially the same as that in Example 25, with the following differences: Fe₂O_{3@}C in Example 25 was changed to CuO@C; a Dv50 of CuO@C was 62 nm; the powder resistivity was 0.25 Ω·cm; a carbon content of CuO@C was 22%; and the sintering temperature was changed to 590°C.

### Example 44

This example provides an electrode active material, and a preparation method thereof was substantially the same as that in Example 25, with the following differences: Fe₂O_{3@}C in Example 25 was changed to Co₃O₄@C; a Dv50 of Co₃O₄@C was 61 nm; the powder resistivity was 0.19 Q cm; a carbon content of Co₃O₄@C was 24%; and the sintering temperature was changed to 610°C.

### Comparative example 7

This comparative example provides an electrode active material. A specific preparation method is described as follows by taking Li₅FeO₄@C as an example.

Mixing: Fe₂O_{3@}C having a carbon content of 1% was selected as the electrode active material precursor. Fe₂O_{3@}C had a Dv50 of 320 nm and a powder resistivity of 25.16 Ω·cm. In addition, lithium hydroxide (LiOH·H₂O) was selected as the A source, and added to the mechanical fusion machine in accordance with a molar ratio of metal Li to metal Fe being 5.1:1. The mixing was performed at 300 rpm for 6 h by means of mechanical fusion.

Sintering: the mixed raw material was heated to a sintering temperature of 600°C under nitrogen at a rate of 3°C/min. A sintering time was 10 h. A product was obtained after natural cooling.

Crushing and grading: the product was crushed, graded, and sieved to obtain the carbon-coated metal oxide particles (Li₅FeO₄@C).

### Comparative example 8

This comparative example provides an electrode active material, and a preparation method thereof was substantially the same as that in Comparative example 7, with the following differences: the Dv50 of Fe₂O_{3@}C in Comparative example 7 was changed to 420 nm; the powder resistivity was 36.78 Ω·cm; the carbon content in Fe₂O_{3@}C was 5%; and the sintering temperature was changed to 750°C. Other operating procedures remained the same.

### Comparative example 9

This comparative example provides an electrode active material, and a preparation method thereof was substantially the same as that in Comparative example 7, with the following differences: the Dv50 of Fe₂O_{3@}C in Comparative example 7 was changed to 250 nm; the powder resistivity was 18.36 Ω·cm; the carbon content in Fe₂O_{3@}C was 25%; the sintering temperature was changed to 450°C; and the sintering time was changed to 2 h. Other operating procedures remained the same.

### Comparative example 10

This comparative example provides an electrode active material, and a preparation method thereof was substantially the same as that in Comparative example 7, with the following differences: the Dv50 of Fe₂O_{3@}C in Comparative example 7 was changed to 350 nm; the powder resistivity was 28.74 Ω·cm; the carbon content in Fe₂O_{3@}C was 50%; the sintering temperature was changed to 800°C; and the sintering time was changed to 22 h. Other operating procedures remained the same.

### Comparative example 11

This comparative example provides an electrode active material, and a preparation method thereof was substantially the same as that in Comparative example 7, with the following differences: Fe₂O₃ was prepared in accordance with steps in Comparative example 5; the Dv50 of Fe₂O₃ was 2,500 nm; the powder resistivity was 68,201.39 Ω·cm; Fe₂O₃ was used as the electrode active material precursor. Other operating procedures remained the same as Comparative example 7. Li₅FeO₄ was directly used as the electrode active material.

### Comparative example 12

This comparative example provides an electrode active material, and a preparation method thereof was substantially the same as that in Comparative example 7, with the following differences: Fe₂O₃/C was prepared in accordance with steps in Comparative example 6; a mass of carbon black was 25% of that of Fe₂O₃; a Dv50 of Fe₂O₃/C was 2,600 nm; a powder resistivity of Fe₂O₃/C was 2,310.23 Ω·cm; Fe₂O₃/C was used as the electrode active material precursor; and Li₅FeO₄ was prepared by sintering in accordance with the process in Comparative example 7. Other operating procedures remained the same.

Parameters related to the carbon-coated metal oxide particles of the above-mentioned Example 23 to Example 44 and Comparative example 7 to Comparative example 12 are shown in Table 2 below.

**[Table 2] Reaction parameters for Example 23 to Example 44 and Comparative example 7 to Comparative example 12**

| No. | Precursor | A source | Powder resistivity of precursor (Ω·cm) | Dv50 of precurso r (nm) | Carbon content of precurso r (wt%) | Sintering temperatur e(°C) | Sinterin g time (h) |
|---|---|---|---|---|---|---|---|
| Example 23 | Fe₂O₃@C | LiOH·H₂ O | 1.02 | 10 | 25% | 600 | 10 |
| Example 24 | Fe₂O₃@C | LiOH·H₂ O | 0.56 | 20 | 25% | 600 | 10 |
| Example 25 | Fe₂O₃@C | LiOH·H₂ O | 0.22 | 60 | 25% | 600 | 10 |
| Example 26 | Fe₂O₃@C | LiOH·H₂ O | 3.58 | 100 | 25% | 600 | 10 |
| Example 27 | Fe₂O₃@C | LiOH·H₂ O | 8.32 | 200 | 25% | 600 | 10 |
| Example 28 | Fe₂O₃@C | LiOH·H₂ O | 15.34 | 60 | 10% | 600 | 10 |
| Example 29 | Fe₂O₃@C | LiOH·H₂ O | 10.13 | 60 | 20% | 600 | 10 |
| Example 30 | Fe₂O₃@C | LiOH·H₂ O | 0.48 | 60 | 30% | 600 | 10 |
| Example 31 | Fe₂O₃@C | LiOH·H₂ O | 0.71 | 60 | 40% | 600 | 10 |
| Example 32 | Fe₂O₃@C | LiOH·H₂ O | 0.22 | 60 | 25% | 500 | 10 |
| Example 33 | Fe₂O₃@C | LiOH·H₂ O | 0.22 | 60 | 25% | 550 | 10 |
| Example 34 | Fe₂O₃@C | LiOH·H₂ O | 0.22 | 60 | 25% | 650 | 10 |
| Example 35 | Fe₂O₃@C | LiOH·H₂ O | 0.22 | 60 | 25% | 700 | 10 |
| Example 36 | Fe₂O₃@C | LiOH·H₂ O | 0.22 | 60 | 25% | 600 | 4 |
| Example 37 | Fe₂O₃@C | LiOH·H₂ O | 0.22 | 60 | 25% | 600 | 8 |
| Example 38 | Fe₂O₃@C | LiOH·H₂ O | 0.22 | 60 | 25% | 600 | 12 |
| Example 39 | Fe₂O₃@C | LiOH·H₂ O | 0.22 | 60 | 25% | 600 | 20 |
| Example 40 | Fe₂O₃@CNT s | LiOH·H₂ O | 0.24 | 60 | 25% | 600 | 10 |
| Example 41 | Fe₂O₃@Gr | LiOH·H₂ O | 0.23 | 60 | 25% | 600 | 10 |
| Example 42 | NiO@C | LiOH·H₂ O | 0.21 | 58 | 23% | 620 | 10 |
| Example 43 | CuO@C | LiOH·H₂ O | 0.25 | 62 | 22% | 590 | 10 |
| Example 44 | Co₃O₄@C | LiOH·H₂ O | 0.19 | 61 | 24% | 610 | 10 |
| Comparativ e example 7 | Fe₂O₃@C | LiOH·H₂ O | 25.16 | 320 | 1% | 600 | 10 |
| Comparativ e example 8 | Fe₂O₃@C | LiOH·H₂ O | 36.78 | 420 | 5% | 750 | 10 |
| Comparativ e example 9 | Fe₂O₃@C | LiOH·H₂ O | 18.36 | 250 | 25% | 450 | 2 |
| Comparativ e example 10 | Fe₂O₃@C | LiOH·H₂ O | 28.74 | 350 | 50% | 800 | 22 |
| Comparativ e example 11 | Fe₂O₃ | LiOH·H₂ O | 68,201.3 9 | 2,500 | / | 600 | 10 |
| Comparativ e example 12 | Fe₂O₃/C | LiOH·H₂ O | 2,310.23 | 2,600 | 25% | 600 | 10 |

### Test methods

Median particle size Dv50: measured by a laser particle size analyzer Mastersizer 2000E (manufactured by Malvern Instruments, UK) in accordance with Particle Size Distribution Laser Diffraction Method, stipulated by GB/T 19077-2016.

Carbon content measurement: a carbon content of powder was measured using a carbon content analyzer, C content analyzer, with equipment model HCS-140, in accordance with Infrared Absorption Method (Conventional Method) Based on Determination of Total Carbon and Sulfur Content in Steel and Iron after Combustion in an Induction Furnace, stipulated by GBT20123-2006.

Powder resistivity measurement: powder of carbon-composite oxide particles or carbon-coated metal oxide particles was dried; an appropriate amount of the powder was weighed, and then a powder resistivity of a sample was determined using a powder resistivity tester, with equipment model ST2722 digital four-probe instrument, in accordance with standard GB/T 30835-2014, "*Carbon composite lithium iron phosphate positive electrode materials for lithium-ion battery*".

Test of first-time charging capacity per gram of carbon-coated metal oxide particles: carbon-coated metal oxide particles, a conductive agent carbon black, and a binder polyvinylidene difluoride (PVDF) were dispersed at in a mass ratio of 80: 10: 10 in a solvent N-methyl-pyrrolidone (NMP), stirred thoroughly and mixed uniformly, to obtain positive electrode slurry. The positive electrode slurry was coated on one surface of a positive electrode collector aluminum foil, and dried and cold pressed to obtain a positive electrode plate. An organic solvent was obtained by uniformly mixing ethylene carbonate (EC) and ethyl methyl carbonate (EMC) in a mass ratio of 30:70. A lithium salt LiPF₆ was dissolved in the organic solvent and mixed uniformly to obtain electrolyte. A concentration of LiPF₆ was 1 mol/L. A lithium plate was used as a counter electrode and assembled with a positive electrode plate to form a button cell. The button cell was charged to 4.25 V at a constant current of 0.1 C and left to stand for 5 min, at which point a charging capacity of the button cell was recorded. The first-time charging capacity per gram was determined through dividing a charging capacity of the battery by a mass of the carbon-coated metal oxide particles.

### Test results

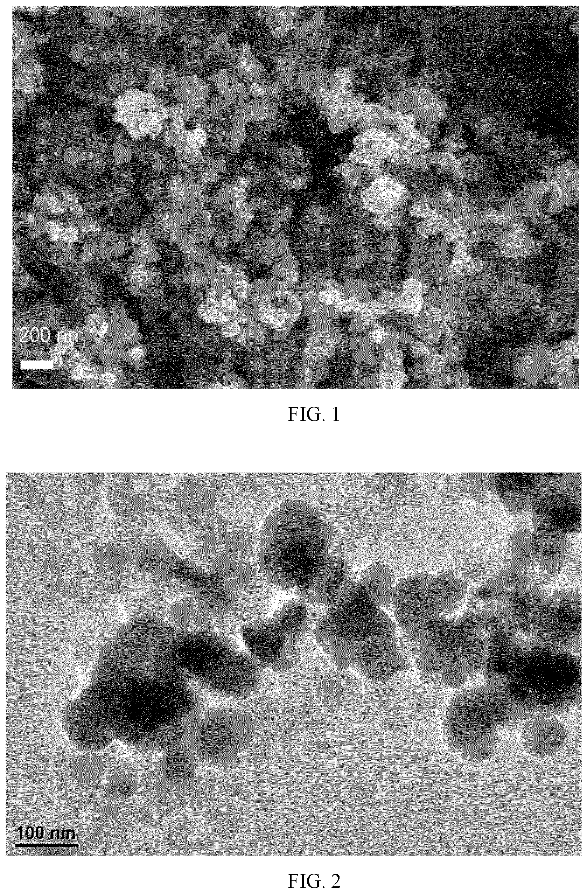

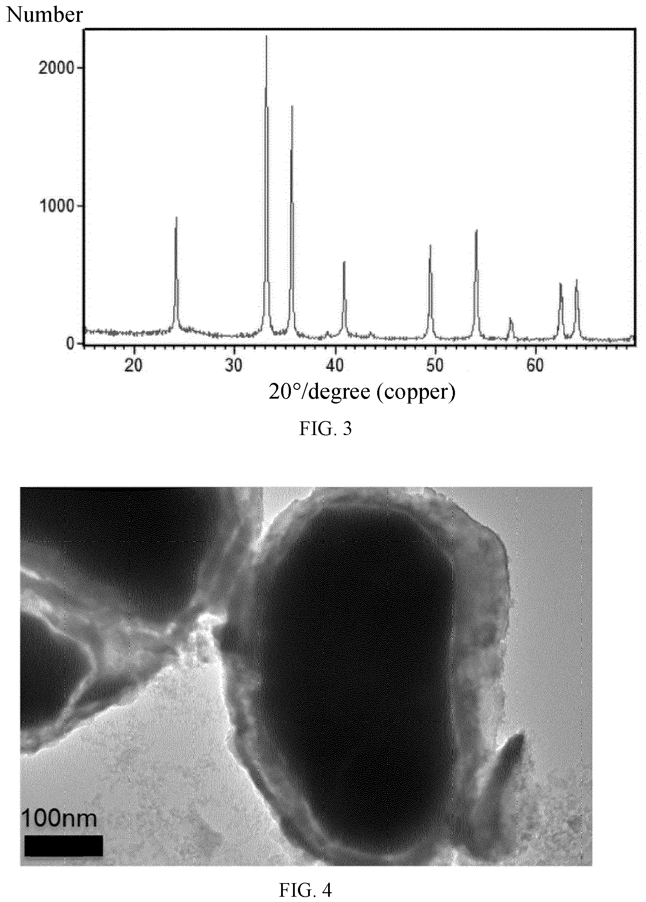

A topographical characterization of the prepared carbon-composite oxide particles was performed using an SEM. A result of the characterization is shown in FIG. 1, in which a large number of particles having a homogeneous morphology, compact structure, and uniform distribution are present. A further topographical characterization of the carbon-composite oxide particles was further performed using a TEM, a test result of which is shown in FIG. 2. The contrast between light and dark in FIG. 2 indicates that the oxide particles are uniformly coated by carbon and have a uniform particle size, and no obvious agglomeration occurs. A structure test was performed on the carbon-composite oxide particles prepared in Example 3 in conjunction with XRD, a test result of which is shown in FIG. 3. A crystalline form comparison shows that a synthesized product is Fe₂O₃@C.

Test results of the powder resistivity and median particle size of the carbon-composite oxide particles of the above-mentioned Example 1 to Example 22 and Comparative example 1 to Comparative example 6 are shown in Table 3 below.

**[Table 3] Test results of the carbon-composite oxide particles prepared in Example 1 to Example 22 and Comparative example 1 to Comparative example 6**

| No. | Composition of carbon-composite oxide particles | Carbon content (wt%) | Powder resistivity of carbon-composite oxide particles (Ω·cm) | Median particle size Dv50 of carbon-composite oxide particles (nm) |
|---|---|---|---|---|
| Example 1 | Fe₂O₃@C | 25% | 1.02 | 10 |
| Example 2 | Fe₂O₃@C | 25% | 0.56 | 20 |
| Example 3 | Fe₂O₃@C | 25% | 0.22 | 60 |
| Example 4 | Fe₂O₃@C | 25% | 3.58 | 100 |
| Example 5 | Fe₂O₃@C | 25% | 8.32 | 200 |
| Example 6 | Fe₂O₃@C | 10% | 0.42 | 30 |
| Example 7 | Fe₂O₃@C | 20% | 0.31 | 40 |
| Example 8 | Fe₂O₃@C | 30% | 0.98 | 70 |
| Example 9 | Fe₂O₃@C | 40% | 2.15 | 80 |
| Example 10 | Fe₂O₃@C | 25% | 0.30 | 45 |
| Example 11 | Fe₂O₃@C | 25% | 0.28 | 47 |
| Example 12 | Fe₂O₃@C | 25% | 0.26 | 65 |
| Example 13 | Fe₂O₃@C | 25% | 1.38 | 75 |
| Example 14 | Fe₂O₃@C | 25% | 2.78 | 94 |
| Example 15 | Fe₂O₃@C | 25% | 0.95 | 68 |
| Example 16 | Fe₂O₃@C | 25% | 2.28 | 83 |
| Example 17 | Fe₂O₃@C | 25% | 4.25 | 110 |
| Example 18 | Fe₂O₃@CNTs | 25% | 0.24 | 58 |
| Example 19 | Fe₂O₃@Gr | 25% | 0.23 | 65 |
| Example 20 | NiO@C | 23% | 0.21 | 58 |
| Example 21 | CuO@C | 22% | 0.25 | 62 |
| Example 22 | Co₃O₄@C | 24% | 0.19 | 61 |
| Comparative example 1 | Fe₂O₃@C | 1% | 25.16 | 320 |
| Comparative example 2 | Fe₂O₃@C | 5% | 36.78 | 420 |
| Comparative example 3 | Fe₂O₃@C | 25% | 18.36 | 250 |
| Comparative example 4 | Fe₂O₃@C | 50% | 28.74 | 350 |
| Comparative example 5 | Fe₂O₃ | / | 68,201.39 | 2,500 |
| Comparative example 6 | Fe₂O₃/C | 25% | 2,310.23 | 2,600 |

The comparison of Example 1 to Example 22 with Comparative example 1 to Comparative example 4 and Comparative examples 5, 6 indicates that the carbon-composite oxide particles disclosed in the present disclosure have low resistivity, a suitable median particle size, and an appropriate carbon content.

Example 1 to Example 5, Comparative example 1, and Comparative example 2 reveal that the powder resistivity and median particle size of the carbon-composite oxide particles can adjusted by adjusting the pH value of the alkaline mixture. The appropriate pH value of the alkaline mixture facilitates the preparation of the carbon-composite oxide particles having the low powder resistivity and the suitable median particle size. Example 6 to Example 13 reveal that the powder resistivity and median particle size of the carbon-composite oxide particles can be adjusted by adjusting the reaction temperature or reaction time of the precipitation reaction. The appropriate reaction temperature and reaction time of the precipitation reaction facilitate the preparation of the carbon-composite oxide particles having the low powder resistivity and the suitable median particle size. The comparison of Example 14 to Example 17, Comparative example 3, and Comparative example 4 reveals that the powder resistivity and median particle size of the carbon-composite oxide particles can be adjusted by adjusting the carbon content of the carbon-composite oxide particles. The median particle size Dv50 and powder resistivity of the carbon-composite oxide particles first decrease and then increase with an increase of the carbon content.

Example 18 and Example 19 reveal that the method for preparing the carbon-composite oxide particles disclosed in the present disclosure is applicable to various carbon sources such as carbon nanotubes and graphite.

Example 20 to Example 22 reveal that the method for preparing the carbon-composite oxide particles disclosed in the present disclosure is applicable to preparation of various carbon-composite oxides such as carbon-composite copper oxide and carbon-composite nickel oxide. The prepared products all have a low powder resistivity and a suitable median particle size.

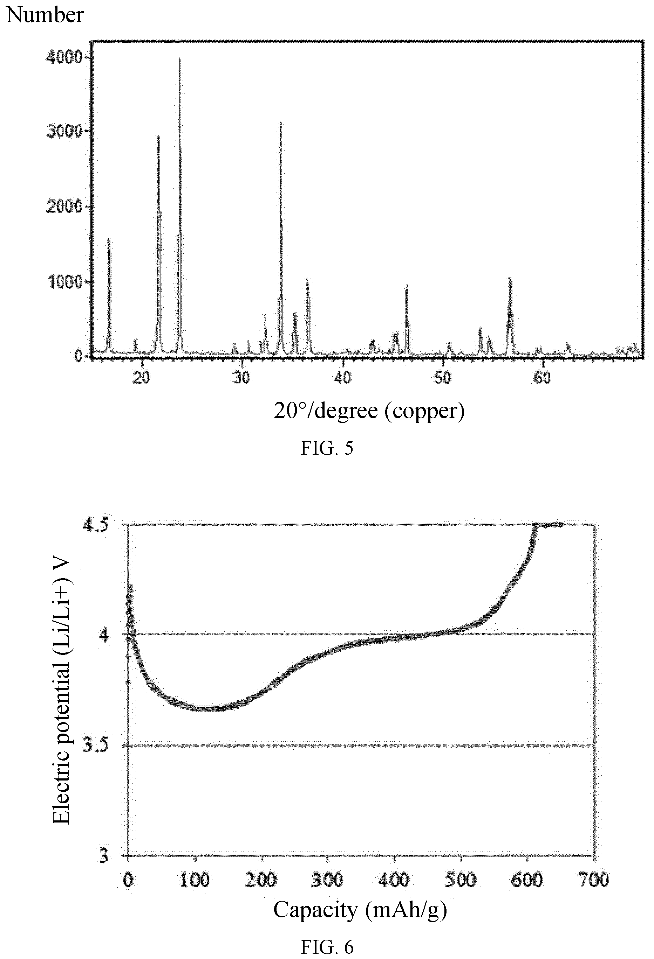

A topography test was performed on the carbon-coated metal oxide particles using a TEM, a test result of which is shown in FIG. 4. The contrast between light and dark in FIG. 4 indicates that active material particles are uniformly coated by carbon and have a particle size at the nano level, and no obvious agglomeration occurs. The carbon-coated metal oxide particles prepared by the method of Example 25 were tested by means of XRD, a test result of which is shown in FIG. 5. A comparison of crystalline form shows that the synthesized product is carbon-coated lithium-rich iron oxide, denoted as Li₅FeO4@C. A battery, which is assembled by using the carbon-coated lithium-rich iron oxide as an electrode material, has a first-time charge curve shown in FIG. 6, based on which a first-time charging capacity per gram of the battery can be calculated.

Test results of the carbon-coated metal oxide particles of the above-mentioned Example 23 to Example 44 and Comparative example 7 to Comparative example 12 are shown in Table 4 below.

**[Table 4] Test results of the carbon-coated metal oxide particles prepared in Example 23 to Example 44 and Comparative example 7 to Comparative example 12**

| No. | Composition of carbon-coated metal oxide particle | c: d ratio | Carbon content (wt%) | Dv50 of carbon-coated metal oxide particles (nm) | Powder resistivity of carbon-coated metal oxide particles (Ω·cm) | First-time charging capacity per gram (mAh/g) |
|---|---|---|---|---|---|---|
| Example 23 | Li₅FeO₄@C | 5 | 10% | 817 | 45.32 | 615 |
| Example 24 | Li₅FeO₄@C | 5 | 10% | 654 | 21.34 | 635 |
| Example 25 | Li₅FeO₄@C | 5 | 10% | 450 | 2.12 | 688 |
| Example 26 | Li₅FeO₄@C | 5 | 10% | 683 | 35.76 | 621 |
| Example 27 | Li₅FeO₄@C | 5 | 10% | 892 | 56.21 | 608 |
| Example 28 | Li₅FeO₄@C | 5 | 2% | 611 | 81.22 | 567 |
| Example 29 | Li₅FeO₄@C | 5 | 5% | 580 | 60.28 | 582 |
| Example 30 | Li₅FeO₄@C | 5 | 15% | 662 | 25.36 | 641 |
| Example 31 | Li₅FeO₄@C | 5 | 20% | 758 | 48.35 | 610 |
| Example 32 | Li₅FeO₄@C | 5 | 10% | 423 | 17.24 | 648 |
| Example 33 | Li₅FeO₄@C | 5 | 10% | 446 | 10.13 | 654 |
| Example 34 | Li₅FeO₄@C | 5 | 10% | 687 | 236.11 | 523 |
| Example 35 | Li₅FeO₄@C | 5 | 10% | 875 | 313.87 | 517 |
| Example 36 | Li₅FeO₄@C | 5 | 10% | 411 | 50.13 | 601 |
| Example 37 | Li₅FeO₄@C | 5 | 10% | 438 | 6.54 | 667 |
| Example 38 | Li₅FeO₄@C | 5 | 10% | 542 | 32.41 | 617 |
| Example 39 | Li₅FeO₄@C | 5 | 10% | 868 | 89.13 | 543 |
| Example 40 | Li₅FeO₄@CNTs | 5 | 10% | 465 | 2.35 | 681 |
| Example 41 | Li₅FeO₄@Gr | 5 | 10% | 458 | 2.24 | 684 |
| Example 42 | Li₂NiO₂@C | 2 | 12% | 441 | 3.18 | 425 |
| Example 43 | Li₂CuO₂@C | 2 | 12% | 455 | 2.83 | 421 |
| Example 44 | Li₆CoO₄@C | 6 | 11% | 453 | 1.24 | 860 |
| Comparative example 7 | Li₅FeO₄@C | 5 | 0.2% | 1,315 | 5,815.26 | 415 |
| Comparative example 8 | Li₅FeO₄@C | 5 | 1% | 2,415 | 3,421.34 | 423 |
| Comparative example 9 | Li₅FeO₄@C | 5 | 10% | 1,627 | 2,228.29 | 457 |
| Comparative example 10 | Li₅FeO₄@C | 5 | 25% | 4,513 | 2,896.17 | 408 |
| Comparative example 11 | Li₅FeO₄ | 5 | / | 15,718 | 68,300.21 | 331 |
| Comparative example 12 | Li₅FeO₄/C | 5 | 10% | 16,828 | 12,124.25 | 383 |

A comparison of Example 23 to Example 44 with Comparative example 7 to Comparative example 12 indicates that, the carbon-coated metal oxide particles, which were prepared by sintering, as a raw material, the above synthesized carbon-composite oxide particles having a uniform particle size distribution, a low powder resistivity and good dispersibility under certain conditions, has a low powder resistivity, a suitable median particle size Dv50, and a high charging capacity per gram.

A comparison of Example 23 to Example 27 with Comparative example 7 to Comparative example 9 indicates that the powder resistivity and median particle size of the carbon-coated metal oxide particles can be adjusted by adjusting the median particle size Dv50 of the carbon-composite oxide particles. The appropriate median particle size Dv50 of the carbon-composite oxide particles facilitates the preparation of the carbon-coated metal oxide particles having the low powder resistivity, appropriate median particle size, and high charging capacity per gram. Example 28 to Example 31 reveal that the powder resistivity and median particle size of the carbon-coated metal oxide particles can be adjusted by adjusting the carbon content of the carbon-composite oxide particles. The appropriate carbon content in the carbon-composite oxide particles facilitates the preparation of the carbon-coated metal oxide particles having the low powder resistivity and suitable median particle size, which in turn increase a capacity per gram of the battery. A comparison of Example 32 to Example 39 with Comparative example 9 and Comparative example 10 reveals that the powder resistivity and median particle size of the carbon-coated metal oxide particles can be adjusted by adjusting the sintering temperature and the sintering time.

Example 40 and Example 41 reveal that the carbon-composite oxide prepared with various carbon sources can be used to prepare the carbon-coated metal oxide particles having the low powder resistivity and high charging capacity per gram.

Example 42 to Example 44 reveal that the method for preparing the carbon-coated metal oxide particles disclosed in the present disclosure is applicable to preparation of various electrode active materials such as Li₂NiO₂@C, Li₂CuO₂@C, and Li₆CoO₄@C. The prepared products all have a low powder resistivity, a suitable median particle size, and a high charging capacity per gram, indicating the versatility of the preparation method.

It should be noted that the present disclosure is not limited to the above embodiments. The above-mentioned embodiments are merely illustrative. Within the scope of the technical solutions of the present disclosure, embodiments having substantially the same composition and exerting the same functions and effects as that of the technical concept shall fall within the technical scope of the present disclosure. In addition, without departing from the scope of the main idea of the present disclosure, various variations of the embodiments that are conceivable to those skilled in the art and other embodiments formed through combining some of the constituent elements of the embodiments shall also fall within the scope of the present disclosure.

## Claims

1. An electrode active material precursor, comprising carbon-composite oxide particles, the oxide satisfying a formula (1):
MₐO_{b} (1),
wherein:
element M is selected from one or more of transition metal elements having a relative atomic mass smaller than 65, optionally being selected from one or more of Ni, Co, Fe, Mn, Zn, Mg, Ca, Cu, Mn, Sn, Mo, Ru, Ir, V, Nb, or Cr;
a>0, and b>0; and
the carbon-composite oxide particles have a powder resistivity smaller than 100 Ω·cm.

2. The electrode active material precursor according to claim 1, wherein the powder resistivity of the carbon-composite oxide particles is smaller than 10 Ω·cm, and optionally smaller than 1 Ω·cm.

3. The electrode active material precursor according to claim 1, wherein a mass percentage of carbon element in the carbon-composite oxide particle ranges from 10% to 40%, and optionally from 20% to 30%.

4. The electrode active material precursor according to claim 1, wherein the carbon-composite oxide particles have a median particle size Dv50 of 10 nm to 200 nm, and optionally of 20 nm to 100 nm.

5. A method for preparing an electrode active material precursor, the method comprising:
dispersing a carbon source in an aqueous solution containing M ions to obtain a mixed solution;
adjusting a pH value of the mixed solution to be alkaline to obtain an alkaline mixture;
obtaining a precipitate through a precipitation reaction of the alkaline mixture;
separating and washing the precipitate to obtain a precursor; and
dehydrating and drying the precursor to obtain the electrode active material precursor, the electrode active material precursor comprising carbon-composite oxide particles, wherein the oxide satisfies a formula (1):
MₐO_{b} (1),
wherein:
element M is selected from one or more of transition metal elements having a relative atomic mass smaller than 65, optionally being selected from one or more of Ni, Co, Fe, Mn, Zn, Mg, Ca, Cu, Mn, Sn, Mo, Ru, Ir, V, Nb, or Cr;
a>0, and b>0; and
the carbon-composite oxide particles have a powder resistivity smaller than 100 Ω·cm.

6. The method for preparing the electrode active material precursor according to claim 5, wherein the alkaline mixture has a pH value ranging from 9 to 13, and optionally from 10 to 12.

7. The method for preparing the electrode active material precursor according to claim 5, wherein a reaction time of the precipitation reaction ranges from 4 hours to 15 hours, and optionally from 6 hours to 12 hours.

8. The method for preparing the electrode active material precursor according to claim 5, wherein a reaction temperature of the precipitation reaction ranges from 30°C to 80°C, and optionally from 40°C to 60°C.

9. The method for preparing the electrode active material precursor according to claim 5, wherein a weak base solution is added to the mixed solution prior to said adjusting the pH value of the mixed solution to be alkaline.

10. The method for preparing the electrode active material precursor according to claim 9, wherein the weak base solution is selected from one or more of aqueous ammonia, an ammonium bicarbonate aqueous solution, an ammonium carbonate aqueous solution, a sodium carbonate aqueous solution, and a sodium bicarbonate aqueous solution.

11. The method for preparing the electrode active material precursor according to claim 5, wherein the carbon source is selected from one or more of carbon black, acetylene black, Ketjen black, carbon nanotubes, graphene, graphite, carbon fiber, and carbon microspheres.

12. The method for preparing the electrode active material precursor according to claim 5, wherein the aqueous solution containing M ions is prepared by dissolving one or more of sulfate, nitrate, oxalate, and halide containing the element M in water.

13. The method for preparing the electrode active material precursor according to claim 5, wherein the precursor is dried at 100°C to 200°C for 6 hours to 20 hours to obtain the electrode active material precursor.

14. An electrode active material, prepared using the electrode active material precursor according to any one of claims 1 to 4 as a raw material.

15. A battery, comprising the electrode active material according to claim 14.
